# EUROPEAN PATENT APPLICATION

(11) **EP 2 540 960 A2**
(43) Date of publication of application: **02.01.2013**
(21) Application number: 12172694.7
(22) Date of filing: 20.06.2012
(51) Int. Cl.: F01C 21/00, F04C 23/00, F04C 29/00, H02K 5/22, H02K 3/50

(54) **Motor-Driven Compressor**

(30) Priority: 28.06.2011 JP 2011143211
(71) Applicant: KABUSHIKI KAISHA TOYOTA JIDOSHOKKI, Kariya-shi, Aichi-ken 448-8671 (JP)
(72) Inventor: Horiba, Tatsuya, Kariya-shi, Aichi-ken,, 448-8671 (JP); Okuyama, Shinichi, Kariya-shi, Aichi-ken,, 448-8671 (JP); Kobayashi, Hiroshi, Kariya-shi, Aichi-ken,, 448-8671 (JP); Mera, Minoru, Kariya-shi, Aichi-ken,, 448-8671 (JP); Fukasaku, Hiroshi, Kariya-shi, Aichi-ken,, 448-8671 (JP)
(74) Representative: Winter, Brandl, Fürniss, Hübner, Röss, Kaiser, Polte - Partnerschaft

(57) **Abstract**

A securing means for an insulating member that is advantageous in improving the efficiency of assembly of a motor-driven compressor is provided. Phase wires 35U, 35V, 35W extending from an end face 231 of a stator core 23, which is closer to a compression mechanism P, are bound to form a phase wire bundle 36. The distal ends of the phase wires 35U, 35V, 35W are electrically connected together, so that a wire connecting portion 361 is formed at the distal end of the phase wire bundle 36. The wire connecting portion 361, which serves as a neutral point, is coated with an insulating tube 37 made of insulating plastic. The distal end of the insulating tube 37 is sealed. A receiving hole 38 is formed in the cluster block 32. The insulating tube 37 is fitted in the receiving hole 38. The insulating tube 37 is inserted from an entrance 381 of the receiving hole 38 that is located on an end face 322 of the cluster block 32 facing the compression mechanism P. The insulating tube 37 is secured to the cluster block 32 by contacting an inner surface 382 of the receiving hole 38.

## Description

### BACKGROUND OF THE INVENTION

The present invention relates to a motor-driven compressor that includes a phase wire bundle formed by binding phase wires extending from phase coils and a wire connecting portion. The wire connecting portion serves as a neutral point, at which the phase wires of the phase wire bundle are connected together.

Japanese Laid-Open Utility Model Publication No. 5-38368 discloses a motor-driven compressor in which lead wires extending from the phase coils are separately connected to connecting terminals in a cluster block. Phase wires, which form a neutral point, are bound together to form a phase wire bundle, and the distal ends of the wires in the phase wire bundle are collectively coupled to a non-connecting terminal (wire connecting portion).

If located inward of the stator, a neutral point hinders installation of other members that are to be arranged inward of the stator. In this regard, Japanese Laid-Open Utility Model Publication No. 5-38368 uses binding threads to tie down the neutral point to the coil ends so that the neural point does not sway.

In this type of motor-driven compressor, only gaseous refrigerant (refrigerant gas) circulates within the compressor during normal operation. However, when the operation is stopped and refrigerant gas remaining in the housing is cooled, liquefied refrigerant (liquid refrigerant) may remain in the housing.

If the wire connecting portion at the neutral point is immersed in the liquid refrigerant remaining in the housing, the wire connecting portion and the housing are conducted to each other via the liquid refrigerant. If the motor-driven compressor starts operating in this state, the current through the wire connecting portion is likely to leak to the housing via the liquid refrigerant.

In this regard, Japanese Laid-Open Patent Publication No. 2005-278289 discloses a rotating electric machine in which a neutral point terminal is formed such that the distal ends of wires at the neutral points do not protrude from a metal sleeve, and the neutral point terminal is covered with an insulating cap. This prevents short circuit between the coils and the distal ends of the wires at the neutral point in the rotating electric machine. However, if the neutral point terminal (wire connecting portion), which is a neutral point, is covered with an insulating cap, liquid refrigerant may enter the insulating cap, and the neutral point terminal may be immersed in the liquid refrigerant. This results in insufficient insulation resistance between the neutral point terminal and the housing. Therefore, to prevent the neutral point terminal from being immersed in liquid refrigerant, the insulating cap may be elongated to ensure the insulation distance to the wire connecting portion.

If the binding method disclosed in Japanese Laid-Open Utility Model Publication No. 5-38368 is employed, the binding process is troublesome and thus lowers efficiency of assembly of a motor-driven compressor. Particularly, when an elongated insulating cap is used to prevent liquid refrigerant from entering the insulating cap, the insulating cap needs to be bound to the coil end. This further lowers the assembly efficiency.

### SUMMARY OF THE INVENTION

Accordingly, it is an objective of the present invention to provide a securing means for an insulating member that is advantageous in improving the efficiency of assembly of a motor-driven compressor.

One aspect of the present invention is a motor-driven compressor comprising: an electric motor having a stator; a compression mechanism that is driven by the electric motor to compress refrigerant; an outer shell for accommodating therein the electric motor and the compression mechanism; a cluster block located inside the outer shell; a phase wire bundle that is formed by binding a plurality of phase wires extending from a plurality of phase coils, which form the stator; and a wire connecting portion serving as a neutral point, at which the phase wires of the phase wire bundle are connected together, wherein the phase wire bundle and the wire connecting portion are coated with an insulating member, and the insulating member is secured to the cluster block by a securing means.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional side view illustrating a motor-driven compressor according to a first embodiment;
Fig. 2 is a cross-sectional view taken along line 2-2 of Fig. 1;
Fig. 3 is a partial enlarged plan view illustrating the motor-driven compressor according the first embodiment;
Fig. 4 is a partial enlarged plan view illustrating a motor-driven compressor according a second embodiment;
Fig. 5a is a partial enlarged plan view illustrating a motor-driven compressor according a third embodiment; and
Fig. 5b is a partial cross-sectional view illustrating a motor-driven compressor according a third embodiment.

### DETAILED DESCRIPTION OF THE PREFERRED EMBODIMENTS

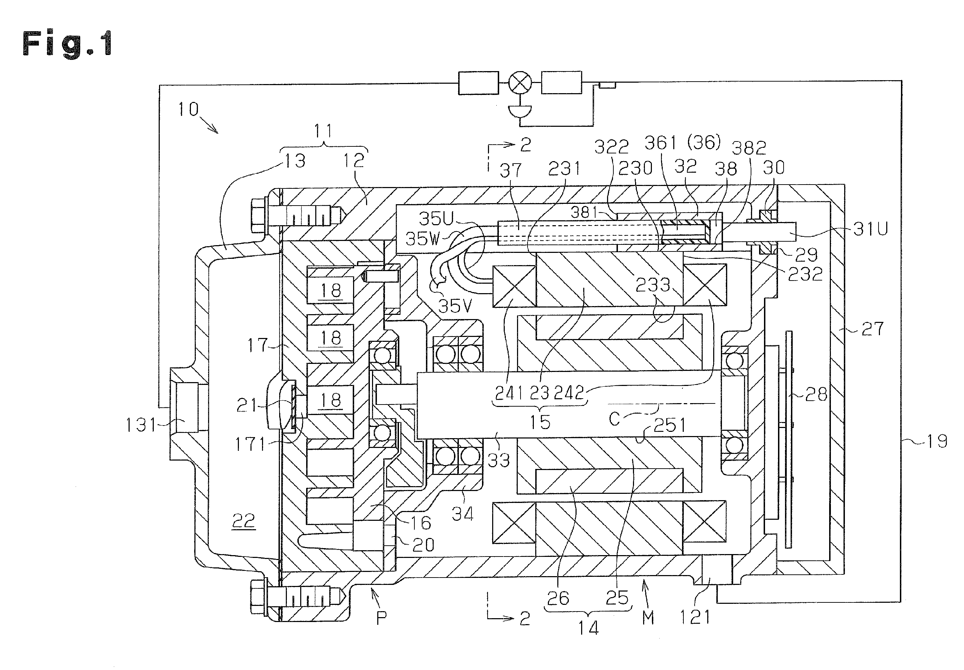

A first embodiment of the present invention will now be described with reference to Figs. 1 to 3.

A motor-driven compressor 10 shown in Fig. 1 is a scroll type motor-driven compressor, which includes a compression mechanism P, which draws in and discharges refrigerant, an electric motor M, and an inverter 28, which is a drive control section for the electric motor M. The compression mechanism P, the electric motor M, and the inverter 28 are arranged in series in that order from the front of the motor-driven compressor 10 (the left side as viewed in Fig. 1) to the rear (the right side as viewed in Fig. 1).

An outer shell 11 of the motor-driven compressor 10 is formed by a motor housing 12 and a front housing 13 coupled to the front end of the motor housing 12. The electric motor M is located in the motor housing 12. The electric motor M includes a rotor 14, a stator 15 and a rotary shaft 33. The rotor 14 is fixed to the rotary shaft 33, and the stator 15 is securely fitted to the inner circumferential surface of the motor housing 12. The compression mechanism P includes a movable scroll 16 and a fixed scroll 17. The movable scroll 16 is accommodated between the fixed scroll 17 and a support block 34, which is fixed to the motor housing 12. The movable scroll 16 is caused to orbit by rotation of the rotary shaft 33. A compression chamber 18 is defined between the movable scroll 16 and the fixed scroll 17. As the movable scroll 16 orbits, the volume of the compression chamber 18 is changed so that refrigerant is drawn in and discharged.

The motor housing 12 has an inlet port 121 connected to an external refrigerant circuit 19. Refrigerant (gas) is drawn into the motor housing 12 from the external refrigerant circuit 19 via the inlet port 121. Orbiting motion (suction motion) of the movable scroll 16 causes refrigerant guided into the motor housing 12 to be drawn into the compression chambers 18 through passages (not shown) between the inner circumferential surface of the motor housing 12 and the outer circumferential surface of the stator 15. The refrigerant gas in the compression chambers 18 is compressed by orbiting motion of the movable scroll 16 (discharge operation), and is discharged into a discharge chamber 22 in the front housing 13 through a discharge port 171 while flexing a discharge valve 21. Refrigerant that has entered the discharge chamber 22 flows out to the external refrigerant circuit 19 through a delivery port 131 formed in the front housing 13, and is recirculated to the motor housing 12.

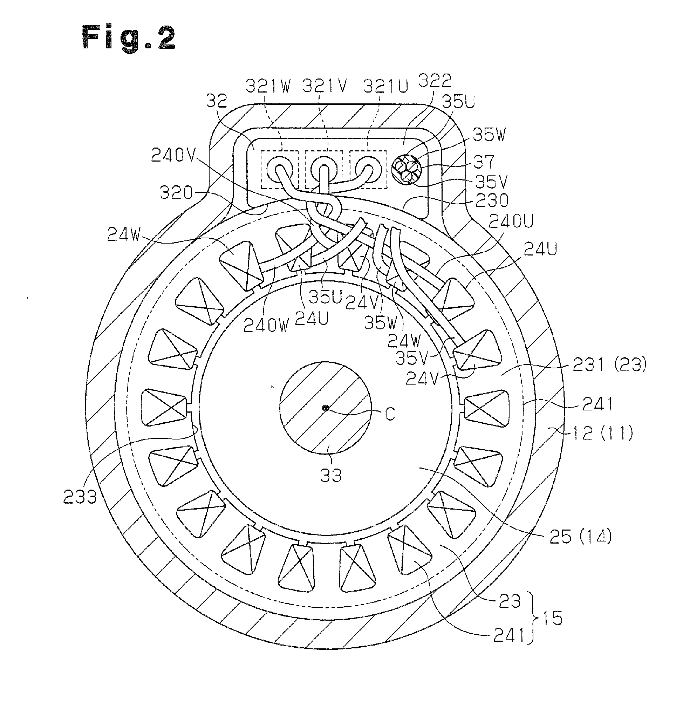

As shown in Fig. 2, the stator 15 of the electric motor M includes an annular stator core 23, and an U-phase coil 24U, a V-phase coil 24Vand a W-phase coil 24W, which are wound about the stator core 23.

Fig. 1 shows a front coil end 241 and a rear coil end 242. The coil end 241 protrudes from a front end face 231 of the stator core 23, and the coil end 242 protrudes from a rear end face 232 of the stator core 23.

The rotor 14 of the electric motor M includes a rotor core 25 and permanent magnets 26, which are embedded in the rotor core 25. A shaft hole 251 extends through a center of the rotor core 25, and the rotary shaft 33 is inserted into and fixed to the shaft hole 251.

A cover 27 is secured to the rear end face of the motor housing 12 (the right end face as viewed in Fig. 1). The inverter 28, which is a drive control section, is located in the cover 27. An insertion hole 29 is formed in the rear end face of the motor housing 12, which is covered with the cover 27. A holding member 30 is fitted in and fixed to the insertion hole 29.

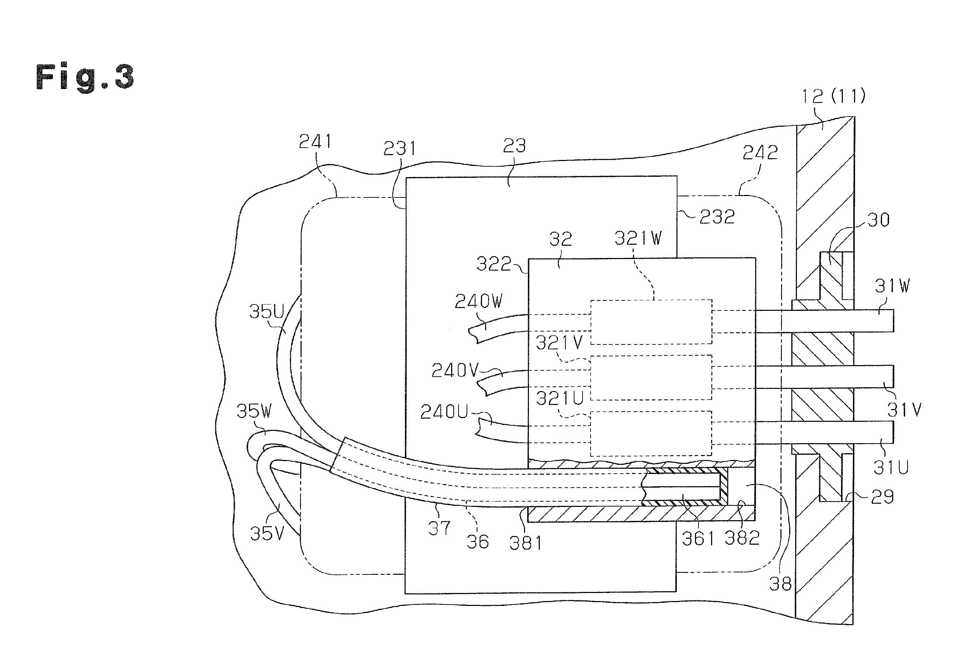

As shown in Fig. 3, a plurality of conductive pins 31 U, 31V, 31W are passed through and held by the holding member 30. Outer ends of the conductive pins 31 U, 31V, 31W, which are protruding outside from the outer shell 11 (the motor housing 12), are connected to the inverter 28 [see Fig. 1] via non-illustrated conductive wires.

As shown in Fig. 2, a cluster block 32 made of insulating plastic is secured to an outer circumferential surface 230 of the stator core 23. The cluster block 32 has a recess 320, which has a shape corresponding to the outer circumferential surface 230 of the stator core 23. The cluster block 32 is attached to the circumferential surface 230 of the stator core 23 by a non-illustrated attaching means. In this state, the recess 320 contacts the arcuate outer circumferential surface of the stator core 23.

As shown in Fig. 3, the cluster block 32 accommodates a U-phase connector 321 U, a V-phase connector 321V, and a W-phase connector 321 W, which are arranged in parallel with each other. The conductive pins 31 U, 31 V, 31 W are connected to the connectors 321 U, 321V, 321W, respectively.

As shown in Fig. 2, a lead wire 240U, which is continuous with the U-phase coil 24U, extends from the front coil end 241 of the stator core 23, and is then connected to the U-phase connector 321 U. A lead wire 240V, which is continuous with the V-phase coil 24V, extends from the coil end 241, and is then connected to the V-phase connector 321V. A lead wire 240W, which is continuous with the W-phase coil 24W, extends from the coil end 241, and is then connected to the W-phase connector 321W. The lead wires 240U, 240V, 240W are all coated with a non-illustrated insulating tube.

As shown in Fig. 3, the lead wire 240U and the conductive pin 31 U are electrically connected to each other through the U-phase connector 321 U. The lead wire 240V and the conductive pin 31V are electrically connected to each other through the V-phase connector 321V. The lead wire 240W and the conductive pin 31W are electrically connected to each other through the W-phase connector 321W.

When the inverter 28 shown in Fig. 1 supplies electricity to the coils 24U, 24V, 24W via the conductive pins 31 U, 31V, 31W, the connectors 321 U, 321V, 321W, and the lead wires 240U, 240V, 240W, the rotor 14 and the rotary shaft 33 rotate integrally inside the stator core 23 (inward of the inner circumferential surface 233 of the stator core 23).

As shown in Fig. 2, a phase wire 35U extending from the U-phase coil 24U, a phase wire 35V extending from the V-phase coil 24V, and a phase wire 35W extending from the W-phase coil 24W are bound to form a phase wire bundle 36. The phase wires 35U, 35V, 35W extend from the coil end 241 on the end face 231 of the stator core 23, which is closer to the compression mechanism P.

As illustrated in Fig. 3, the distal ends of the phase wires 35U, 35V, 35W, which form the phase wire bundle 36, are electrically connected together, so that a wire connecting portion 361 is formed at the distal end of the phase wire bundle 36. The wire connecting portion 361, which serves as a neutral point, is coated with an insulating tube 37 made of insulating plastic. The distal end of the insulating tube 37 is sealed.

As shown in Fig. 3, the cluster block 32 has a receiving hole 38, which serves as a securing means, or a retainer. The receiving hole 38 is parallel with the connectors 321 U, 321V, 321 W. The insulating tube 37, which functions as an insulating member, is fitted in the receiving hole 38. More specifically, the insulating tube 37 is inserted from an entrance 381 of the receiving hole 38 that is located on an end face 322 of the cluster block 32 facing the compression mechanism P. The insulating tube 37 is secured to the cluster block 32 by contacting an inner surface 382 of the receiving hole 38.

Operation of the first embodiment will now be described.

The insulating tube 37 is fitted in the receiving hole 38 to reach the farthest point possible from the entrance 381 of the receiving hole 38. Accordingly, the phase wires 35U, 35V, 35W are extended without sagging. This prevents the phase wires 35U, 35V, 35W from being displaced to positions inward of the stator core 23. Since the phase wires 35U, 35V, 35W extend from the coil end 241, the lead wires 240U, 240V, 240W are not moved to positions inward of the stator core 23.

Since the insulating tube 37 is fitted in and held by the receiving hole 38, the insulating tube 37 is unlikely to be detached from the phase wire bundle 36.

The first embodiment has the advantages described below.
(1) With the insulating tube 37 fitted in the receiving hole 38, the phase wire bundle 36 is prevented from swaying. That is, the phase wire bundle 36 is prevented from being moved to a position inward of the stator core 23 without using a binding thread. Thus, installation of members that are to be arranged in the stator core 23, such as the rotor core 25 and the support block 34, is not hindered.
(2) The insulating tube 37 is secured to the cluster block 32 simply by fitting the insulating tube 37 in the receiving hole 38. Such fitting operation is easy, which improves the efficiency of assembly of the motor-driven compressor 10. Since the inner surface 382 of the receiving hole 38 contacts the insulating tube 37, the insulating tube 37 is not easily detached from the receiving hole 38. In other words, the insulating tube 37 is reliably secured to the cluster block 32.
(3) The receiving hole 38 can be easily formed in the cluster block 32, which is made of insulating plastic. Accordingly, the structure for securing the insulating tube 37 to the cluster block 32 is simplified.
(4) Since the receiving hole 38 is a through hole, the phase wire bundle 36 can be extended as much as possible so that the phase wire bundle 36 is reliably prevented from sagging.
(5) Since the compression mechanism P, the electric motor M, and the inverter 28 are arranged in that order in series, the phase wires 35U, 35V, 35W and the lead wires 240U, 240V, 240W extend from the end face 231 of the stator core 23, which is closer to the compression mechanism P. Therefore, no electrical wire connecting needs to be performed in the narrow clearance between the electric motor M and the inverter 28 (in the example of Fig. 1, the clearance between the end face 232 and the rear end face of the motor housing 12). That is, since the compression mechanism P, the electric motor M, and the inverter 28 are arranged in that order in series, wire connecting can be easily performed. This improves the efficiency of assembly of the motor-driven compressor 10.
   The present invention, in which the insulating tube 37 is secured to the cluster block 32, is particularly suitable for the motor-driven compressor 10, which has components arranged in series and improves the assembly efficiency.
(6) The phase wire bundle 36 and the wire connecting portion 361 are coated with the insulating tube 37. Therefore, even if liquid refrigerant is pooled in the motor-driven compressor 10, the wire connecting portion 361 is prevented from being immersed in the liquid refrigerant.

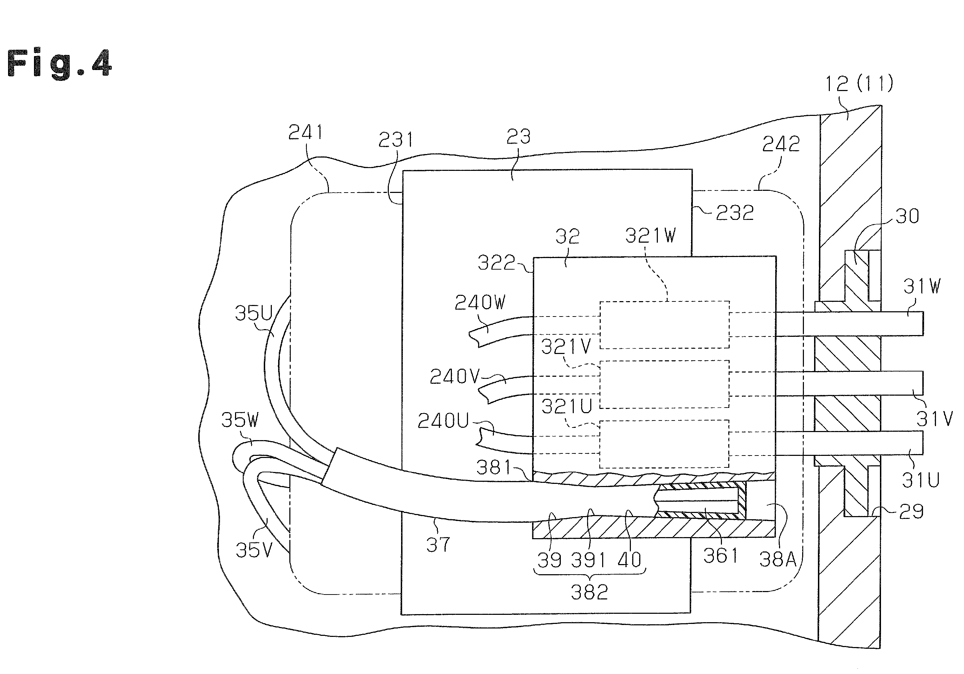

A second embodiment will now be described with reference to Fig. 4. The same reference numerals are given to those components that are the same as the corresponding components of the first embodiment, and detailed explanations are omitted.

An inner surface 382 of a receiving hole 38A, which serves as a securing means, or a retainer, has a tapering portion 39 and a widening portion 40. The tapering portion 39 has a diameter that decreases from the entrance 381 in the direction of depth (from the side corresponding to the coil end 241 toward the coil end 242). The widening portion 40 has a diameter that increases in the direction of depth.

The boundary between the tapering portion 39 and the widening portion 40 is a smallest diameter portion 391 of the tapering portion 39. The insulating tube 37 is compressed in an area including the smallest diameter portion 391. Such a compressing structure further reliably prevents the insulating tube 37 from coming out of the receiving hole 38A. That is, the insulating tube 37 is further reliably secured to the cluster block 32.

Since the insulating tube 37 is compressed in an area including the smallest diameter portion 391 of the tapering portion 39, liquid refrigerant is reliably prevented from entering the insulating tube 37.

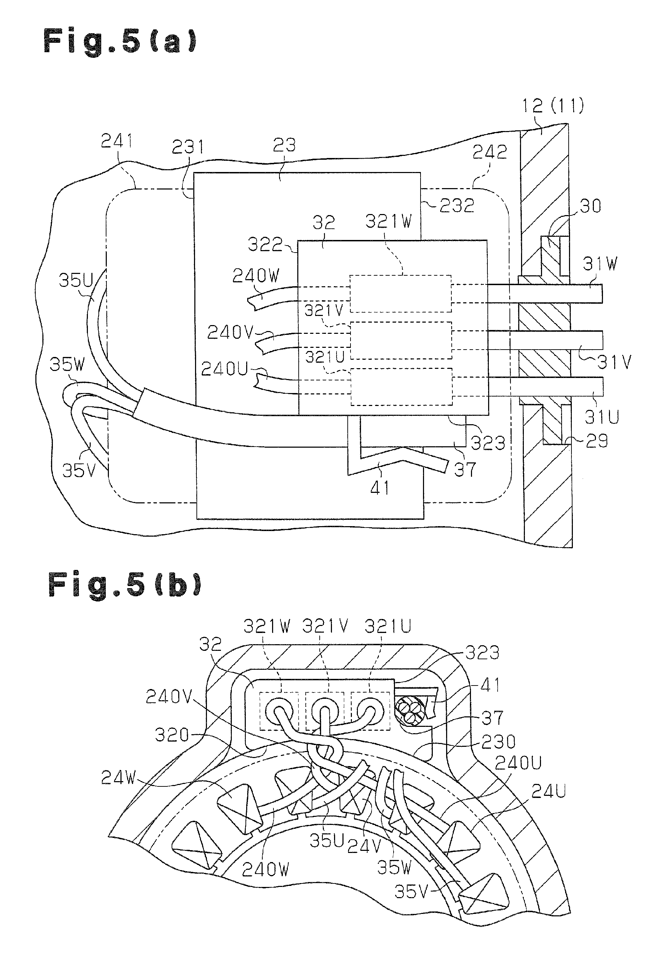

A third embodiment will now be described with reference to Figs. 5(a) and 5(b). The same reference numerals are given to those components that are the same as the corresponding components of the first embodiment, and detailed explanations are omitted.

A hook 41 serving as a securing means, or a retainer, extends from a side surface 323 of the cluster block 32. The hook 41 is formed integrally with the cluster block 32. The insulating tube 37 is hooked to and fastened by the hook 41.

The insulating tube 37 is secured to the cluster block 32 simply by being hooked to the hook 41. Such hooking operation is easy, which improves the efficiency of assembly of the motor-driven compressor 10. Also, the hook 41 is easily formed in the cluster block 32, which is made of insulating plastic. Accordingly, the structure for hooking the insulating tube 37 to the hook 41 is simplified.

Since the insulating tube 37 is fastened by the hook 41, liquid refrigerant is reliably prevented from entering the insulating tube 37.

The above illustrated embodiments may be modified as follows.

In the first and second embodiments, the insulating tube 37 may be fixed in the receiving hole 38, 38A using adhesive.

In the first and second embodiments, the insulating tube 37 may be fixed in the receiving hole 38, 38A through ultrasonic welding.

The insulating member may be formed by winding an insulating tape around the phase wire bundle 36.

The receiving hole does not need to be a through hole.

The inverter 28 (the drive control section) may be located on the outer circumference of the electric motor M.

## Claims

1. A motor-driven compressor (10) comprising:
an electric motor (M) having a stator (15);
a compression mechanism (P) that is driven by the electric motor (M) to compress refrigerant;
an outer shell (11) for accommodating therein the electric motor (M) and the compression mechanism (P);
a cluster block (32) located inside the outer shell (11);
a phase wire bundle (36) that is formed by binding a plurality of phase wires (35U, 35V, 35W) extending from a plurality of phase coils (24U, 24V, 24W), which form the stator (15); and
a wire connecting portion (361) serving as a neutral point, at which the phase wires (35U, 35V, 35W) of the phase wire bundle (36) are connected together,
the motor-driven compressor (10) being **characterized in that**:
the phase wire bundle (36) and the wire connecting portion (361) are coated with an insulating member (37), and the insulating member (37) is secured to the cluster block (32) by a securing means (38, 41).

2. The motor-driven compressor (10) according to claim 1, **characterized in that** the securing means (38) is defined by a receiving hole (38) formed in the cluster block (32), the insulating member (37) is fitted in the receiving hole (38), and the insulating member (37) contacts an inner surface (382) of the receiving hole (38).

3. The motor-driven compressor (10) according to claim 2, **characterized in that** the receiving hole (38) has a tapering portion (39), the diameter of which decreases from an entrance of the receiving hole (38) in the direction of depth, and a widening portion (40), the diameter of which increases from the tapering portion (39) in the direction of depth.

4. The motor-driven compressor (10) according to claim 2, **characterized in that** the receiving hole (38) is formed as a through hole that extends through the cluster block (32).

5. The motor-driven compressor (10) according to claim 2, **characterized in that** the cluster block (32) includes connectors (321 U, 321V, 321 W) connected to lead wires (240U, 240V, 240W) extending from the phase coils (24U, 24V, 24W), and the receiving hole (38) and the connectors (321 U, 321V, 321 W) are arranged in parallel.

6. The motor-driven compressor (10) according to claim 1, **characterized in that** the securing means (41) is a hook (41) that extends from the cluster block (32), and the insulating member (37) is hooked to the hook(41).

7. The motor-driven compressor (10) according to claim 1, **characterized in that** the stator (15) has opposite end faces (231, 232), and the compression mechanism (P), the electric motor (M), and a drive control section (28) for the electric motor (M) are arranged **in that** order in series, and the phase wires (35U, 35V, 35W) extend from one of the end faces (231) of the stator (15) that is closer to the compression mechanism (P).
